Europäisches Patentamt

European Patent Office

Office européen des brevets

(11) Publication number: 0 359 570 A2

# EUROPEAN PATENT APPLICATION

(21) Application number: 89309359.1

(22) Date of filing: 14.09.89

(51) Int. Cl.5: G 01 M 3/24

(30) Priority: 14.09.88 GB 8821492

(43) Date of publication of application:
21.03.90 Bulletin 90/12

(84) Designated Contracting States:
AT BE CH DE ES FR GB GR IT LI LU NL SE

(71) Applicant: TATE & LYLE PUBLIC LIMITED COMPANY
Sugar Quay Lower Thames Street
London, EC3R 6DQ (GB)

(72) Inventor: Marshall, Wilfred Garry
Camerton Lodge Main Road
Camerton Hull HU12 9NQ (GB)

(74) Representative: Ablewhite, Alan James et al
MARKS & CLERK 57/60 Lincoln's Inn Fields
London WC2A 3LS (GB)

(54) Leak detecting apparatus.

(57) A leak detecting apparatus for detecting a leak in a container such as an oil drums to be tested, comprises ultrasound detecting means;
ultrasound measuring means with an operative connection to said detecting means;
means for altering gas pressure; and
sealing means for sealing the container;
the detecting means being disposed on one side of said sealing means and the measuring means being disposed on another side of said sealing means; the means for altering gas pressure and the said operative connection being disposed within and extending through said sealing means from said one side to said other side; whereby the detecting means can be placed within the container thereby sealing the container and the means for altering gas pressure can provide a difference in gas pressure between the inside and the outside of the container. A related method of detecting a leak in a container comprises providing a difference in the gas pressure between the inside and the ouside of the container and monitoring the ultrasonic emission produced by a leak of gas from the higher pressure side to the lower pressure side, characterised in that a combination of ultrasonic monitoring means and means for causing the pressure difference are introduced into the container itself through an opening therein and sealed, a pressure difference is supplied and ultrasonic emissions are detected inside the container itself.

EP 0 359 570 A2

**Description**

# LEAK DETECTING APPARATUS

This invention relates to a leak detecting apparatus, for detecting a leak in a container completely surrounding an enclosed volume, which container includes, e.g. a sealed pipeline or a container such as an oil drum, a gas cylinder, a vacuum chamber or a decompression chamber, and to a method of detecting a leak in a container.

Well known methods of detecting a leak in a container include the following:

A container such as a sealed pipeline or a container may be pressurised in order to listen for sound emitted by colliding molecules passing out through a leak in the container. The disadvantage of this method is that a leak caused by a hole smaller than about 0.5mm. may be difficult to detect, especially in the presence of background noise. The sound emitted by colliding molecules extends into the ultrasonic region, therefore in order to increase the sensitivity of this method, an ultrasonic receiver may be used to detect a small leak. Again, however, the sensitivity of this method is limited by background ultrasonic or "pink" noise, on top of which may be added ultrasonic noise emitted by other sources, e.g. by pneumatic equipment often found in a working environment such as a garage, laboratory or a factory. A further disadvantage of this method is that the receiver must be scanned around the container in which a leak is to be detected, or the receiver must be held stationary and the container moved about the receiver.

An extremely small leak may be detected in a container such as a vacuum chamber placed under vacuum (at typically 1 Pa) with a mass spectrometer connected to an ionisation gauge head positioned inside the chamber. A leak is detected by passing a tube releasing gas e.g. helium over the container and looking for peaks in the helium line detected on the spectrometer. Although being very accurate this method is time consuming, expensive and may not easily be automated.

A further method involves submerging a container such as a pressurised container into a water bath or coating the container with a soap film, so that a leak may be detected by visually inspecting air bubbles coming from the leak. The disadvantages of this method is that an operator must be present to inspect the bubbles and also an inconveniently long time may be sent setting up the apparatus. Automation is again difficult to achieve.

In order to automate a leak detecting apparatus, a "pressure decay" method may be employed, wherein a sealed container is placed in an evacuated or pressurised chamber, and then the pressure inside the chamber is monitored in order to record the increase or decrease in pressure with time. This method may again be time consuming especially where a small leak (e.g. a hole less than about 0.5mm in diameter) is involved.

It is an object of the present invention to provide a leak detecting apparatus and a method of detecting a leak in a container or other enclosure, which avoid the aforesaid disadvantages of conventional leak detecting apparatus and methods thereof.

By means of the present invention a leak detecting apparatus and method of detecting leaks, rapidly and accurately, is provided. The positioning of a sound detector within a container improves the sensitivity of the sound detector by using the container itself as a barrier to external noise. This is particularly important in environments where a lot of noisy equipment is present. Also if desired, high pressure differences can be applied, depending on the container, in order to detect very small apertures.

According to one aspect of the present invention there is provided a leak detecting apparatus for detecting a leak in a container, such as an oil drum, to be tested, comprising
ultrasound detecting means;
ultrasound measuring means with an operative connection to said detecting means;
means for altering gas pressure; and
sealing means for sealing the container;
the detecting means being disposed on one side of said sealing means and the measuring means being disposed on another side of said sealing means; the means for altering gas pressure and the said operative connection being disposed within and extending through said sealing means from said one side to said other side; whereby the detecting means can be placed within the container thereby sealing the container and the means for altering gas pressure can provide a difference in gas pressure between the inside and the outside of the container.

Any suitable ultrasound detecting means may be employed but preferably an ultrasonic receiver such as a piezoelectric transducer is employed.

The sound detecting means is preferably positioned within said container by automatic positioning means, such as by pneumatic or hydraulic means actuable by e.g. computer control.

The pressure within the container may be changed, with respect to that outside of the container, by either increasing the pressure within the container or more preferably by reducing the pressure within the container.

The air within the container may be mixed with or more preferably replaced by an inert gas, such as helium, to improve the transmission of sound within the container.

The container should absorb most of the sound impinging on the outside however, sound insulation may be placed around the container if necessary. Any suitable sound insulation material may be employed such as a mineral fibre.

According to another aspect of the present invention there is provided a method of detecting a leak in a container by providing a difference in the gas pressure between the inside and the ouside of the container and monitoring the ultrasonic emission produced by a leak of gas from the higher pressure side to the lower pressure side, characterised in that a combination of ultrasonic monitoring means and means for causing the pressure difference are introduced into the container itself through an opening therein and sealed, a pressure difference is supplied and ultrasonic emissions are detected inside the container itself.

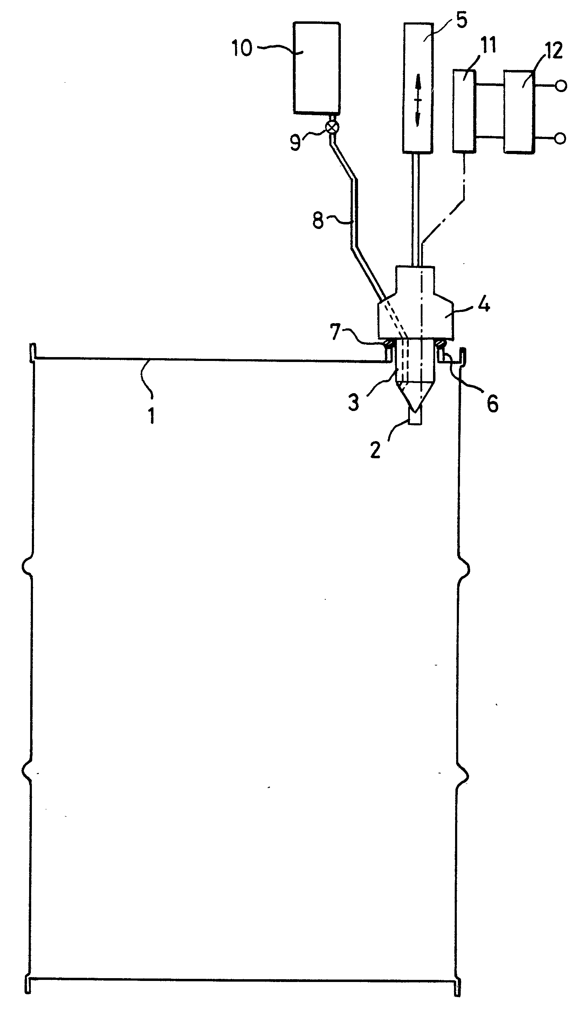

A preferred embodiment of the present invention will now be described, by way of example only, with reference to the accompanying drawing, in which drawing is shown a schematic embodiment of a leak detecting apparatus according to the present invention.

Referring to the drawing there is shown therein a leak detecting apparatus to be used specifically on an oil drum 1 of typically up to 200 litres capacity, positioned within a work station (not shown). An ultrasonic transducer 2, e.g. a Dawe Instruments Ltd type No.8902C, is mounted on the end of a housing 3. The housing is attached to a control head 4, which head 4 is connected to a pneumatic piston 5, so that the transducer 2 may be inserted into or withdrawn from a tapping 6 in the top of the oil drum 1. An 'O' ring seal 7 is secured to the head 4 to make an air tight seal between the top of the head 4 and the top of the tapping 6. A gas line 8 is included within the housing 3 and head 4. The gas line 8 terminates at an opening in the housing 3 and extends from the head 4 to be coupled to a valve 9. From the valve 9 the gas line 8 connects to a gas cylinder 10 containing e.g., helium or compressed air. An electrical measuring device 11 is electrically connected to the transducer 2. The measuring device 11 is further connected to a level detector/trigger amplifier circuit 12.

In operation the oil drum 1 to be tested is automatically fed into the work station. The oil drum 1 is then rotated until a proximity sensor (not shown) locates the position of the tapping 6 beneath the control head 4. The head 4 is then lowered by control of the pneumatic piston 5 so that the head 4 makes an air tight seal with the tapping 6. The valve 9 is automatically opened in order to allow helium gas or compressed air into the oil drum 1 up to a pressure of about 41364 Pa (6 p.s.i). at which pressure the valve 9 is closed. The presence of helium improves the sound transmission within the oil drum 1 because sound travels approximately three times faster in helium than in air.

A leak in the oil drum 1, e.g. caused by a hole of about 0.4mm diameter is immediately detected by the transducer 2, due to the ultrasonic radiation emitted by colliding gas molecules rushing out of the oil drum though holes or fractures in the container of the oil drum 1. A measured electrical signal, from the transducer 2, is sent to the level detecting/trigger amplifier circuit 12 whereupon either a pass. indicating no detectable leak, or a fail signal is sent to a control to pass or reject the oil drum 1.

In a typical operational run at least 4 oil drums per minute may be tested which compares favourably with prior art leak detecting apparatus.

The whole operation may easily be automated by control from e.g. a central computer. A further advantage of this technique is that a computer can be programmed to test various types of containers, e.g. different sized oil drums.

The apparatus and method described above is given by way of example only and many modifications can be made without departing from the scope of the invention as defined by the appended claims. For example, it is envisaged that a leak could be detected in a gas line by positioning sound detecting means in situ within said gas line at important points such as close to joints or valves. Measuring means operationally connected to said sound detecting means could then send an early warning signal to a control to shut down a particular section of said gas line if a leak were detected.

## Claims

1. A leak detecting apparatus for detecting a leak in a container such as an oil drums to be tested, comprising ultrasound detecting means;
ultrasound measuring means with an operative connection to said detecting means;
means for altering gas pressure; and
sealing means for sealing the container;
the detecting means being disposed on one side of said sealing means and the measuring means being disposed on another side of said sealing means; the means for altering gas pressure and the said operative connection being disposed within and extending through said sealing means from said one side to said other side; whereby the detecting means can be placed within the container thereby sealing the container and the means for altering gas pressure can provide a difference in gas pressure between the inside and the outside of the container.

2. Apparatus according to claim 1 in which the means for altering gas pressure comprises a source of compressed gas connected to a conduit passing through said sealing means.

3. Apparatus according to claim 1 or claim 2, in which said sealing means is adapted to fit the neck or orifice of a drum or the like.

4. Apparatus according to any of claims 1 to 3, in which the detecting means comprises a transducer coupled to means for inserting and withdrawing the transducer into and from the container.

5. A method of detecting a leak in a container by providing a difference in the gas pressure between the inside and the ouside of the container and monitoring the ultrasonic emission produced by a leak of gas from the higher pressure side to the lower pressure side, characterised in that a combination of ultrasonic monitoring means and means for causing the pressure difference are introduced into the container itself through an opening therein and sealed, a pressure difference is supplied and ultrasonic emissions are detected inside the container itself.